Europäisches Patentamt

European Patent Office

Office européen des brevets

(11) Numéro de publication: **0 527 076 B1**

# FASCICULE DE BREVET EUROPEEN

(45) Date de publication de fascicule du brevet: **25.01.95** (51) Int. Cl.⁶: **B60R 16/02**, H04L 25/08

(21) Numéro de dépôt: **92402138.9**

(22) Date de dépôt: **23.07.92**

(54) **Dispositif de transmission d'informations en différentiel entre au moins deux organes d'un véhicule automobile.**

(30) Priorité: **07.08.91 FR 9110070**

(43) Date de publication de la demande:
**10.02.93 Bulletin 93/06**

(45) Mention de la délivrance du brevet:
**25.01.95 Bulletin 95/04**

(84) Etats contractants désignés:
**DE ES GB IT SE**

(56) Documents cités:
**EP-A- 0 295 897**
**EP-A- 0 318 354**
**EP-A- 0 329 514**
**EP-A- 0 404 630**
**EP-A- 0 427 638**

(73) Titulaire: **AUTOMOBILES PEUGEOT**
**75, avenue de la Grande Armée**
**F-75116 Paris (FR)**

Titulaire: **AUTOMOBILES CITROEN**
**62 Boulevard Victor-Hugo**
**F-92200 Neuilly-sur-Seine (FR)**

Titulaire: **REGIE NATIONALE DES USINES RE-NAULT S.A.**
**34, Ouai du Point du Jour**
**F-92109 Boulogne Billancourt (FR)**

(72) Inventeur: **Lecocq, Jean-Luc**
**9, rue Camille Desmoulins**
**F-92310 Sevres (FR)**
Inventeur: **Magne, Pierre**
**7, rue Pierre Loti**
**F-95360 Montmagny (FR)**

(74) Mandataire: **Habasque, Etienne Joel Jean-François et al**
**Cabinet Lavoix**
**2, Place d'Estienne d'Orves**
**F-75441 Paris Cédex 09 (FR)**

**Description**

La présente invention concerne un dispositif de transmission d'informations en différentiel entre au moins deux organes d'un véhicule automobile, reliés par deux lignes de transmission d'informations.

Dans ces dispositifs, chaque organe comporte des moyens d'émission d'informations et des moyens de réception d'informations, reliés à un gestionnaire de protocole.

Un dispositif de ce type conforme au préambule de la revendication 1 est connu du document EP-A-0 329 514 aux noms des Demanderesses.

Ces dispositifs de transmission d'informations en différentiel ont été développés lors de la définition des systèmes de transmission pour véhicule automobile, à cause d'un certain nombre de problèmes liés à ces applications et notamment des parasites pouvant perturber ces transmissions.

L'utilisation de la transmission différentielle permet d'obtenir une bonne immunité à ces parasites mais elle présente un certain nombre d'inconvénients au niveau de sa fiabilité.

En effet, celle-ci est liée à la fiabilité de la connectique (microcoupures, oxydation des contacts, etc ...), aux possibilités de mise au potentiel de la carrosserie ou au plus de la batterie d'un des fils de transmission, ce qui a pour effet d'empêcher le fonctionnement correct de ce type de systèmes de transmission.

Une réponse à ce problème est déjà connue du document EP-A-0318354 aux noms de AUTOMOBILES PEUGEOT, AUTOMOBILES CITROEN et REGIE NATIONALE DES USINES RENAULT. Dans ce document, on utilise un couplage capacitif de la transmission en mode Polling entre les différents organes du véhicule.

Il est ainsi possible de faire fonctionner le dispositif décrit dans ce document selon un mode normal en différentiel ou dégradé à partir des informations transitant sur l'une des lignes de transmission d'informations.

Cependant, ce dispositif est limité à certaines applications et n'est pas applicable par exemple à un réseau de transmission d'informations multimaîtres.

En effet, dans un réseau de ce type, tous les organes reliés au réseau peuvent accéder aux lignes de transmission pour imposer leur message sur celles-ci et il est donc important d'assurer une bonne diffusion du message et une bonne cohérence de celui-ci pour tous les organes.

La solution proposée dans le document précédent ne peut résoudre les différents problèmes liés aux différents modes de défaillance de ce type de réseaux.

Le but de l'invention est donc de résoudre ces problèmes en proposant un dispositif de transmission d'informations qui soit simple, fiable et qui permette d'assurer une transmission d'informations suffisante même lorsque l'une des lignes de transmission est perturbée et qui soit applicable en particulier à un réseau multimaîtres.

A cet effet, l'invention a pour objet un dispositif de transmission d'informations en différentiel entre au moins deux organes d'un véhicule automobile, reliés par deux lignes de transmission d'informations, dont chacun comporte des moyens d'émission d'informations et des moyens de réception d'informations, reliés à un gestionnaire de protocole, les moyens de réception de chaque organe comportant trois comparateurs, un premier recevant en entrée les signaux transitant sur les deux lignes de transmission d'informations, un second recevant en entrée les signaux transitant sur une ligne de transmission d'informations et un troisième recevant en entrée les signaux transitant sur l'autre ligne de transmission d'informations, caractérisé en ce qu'il comporte, interposés entre la sortie de ces comparateurs et l'entrée d'informations du gestionnaire de protocole, des moyens de connexion sélective de la sortie du premier comparateur ou de la sortie de moyens de combinaison logique des sorties des second et troisième comparateurs, à l'entrée d'informations du gestionnaire du protocole, sous la commande de celui-ci en fonction de l'état des signaux présents à son entrée d'informations, pour permettre un fonctionnement du dispositif en mode différentiel normal et en mode dégradé à partir des informations transitant sur l'une des lignes de transmission.

Selon un mode de réalisation, les moyens de connexion sélective comprennent un multiplexeur dont la sortie est reliée à l'entrée d'informations du gestionnaire de protocole, dont les entrées reçoivent la sortie du premier comparateur et la sortie des moyens de combinaison logique des sorties des second et troisième comparateurs et piloté par une sortie de contrôle du gestionnaire de protocole.

L'invention sera mieux comprise à l'aide de la description qui va suivre donnée uniquement à titre d'exemple et faite en se référant aux dessins annexés sur lesquels :

- la figure 1 représente un schéma synoptique d'un organe entrant dans la constitution d'un dispositif de transmission d'informations selon l'invention, et
- la figure 2 représente un schéma électrique d'un mode de réalisation de moyens de connexion sélective et de moyens de combinaison logique entrant dans la constitution d'un dispositif selon l'invention.

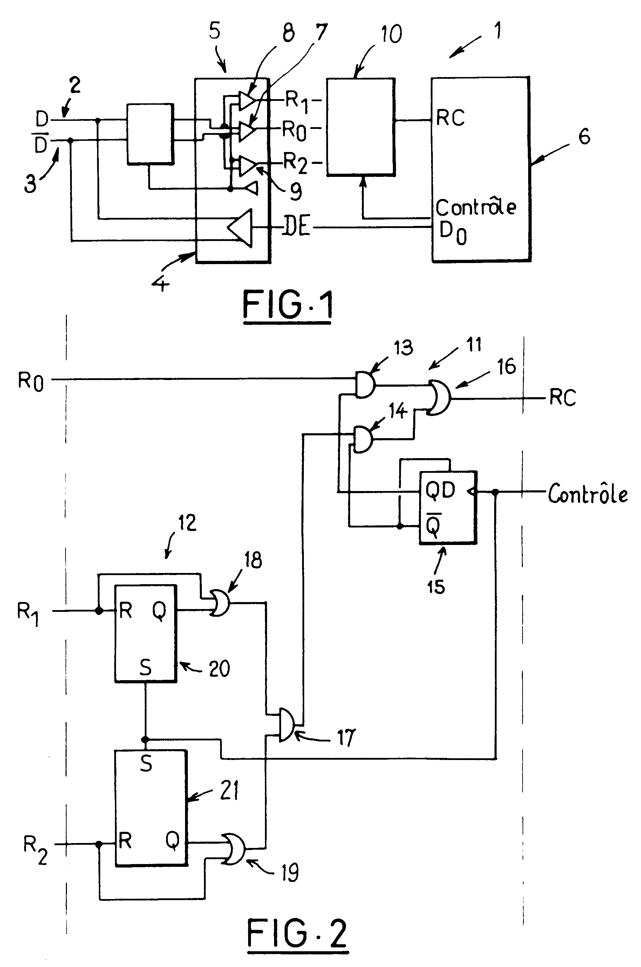

Ainsi qu'on peut le voir sur ces figures, un dispositif de transmission d'informations en différentiel, selon l'invention, permet de transmettre des informations entre au moins deux organes d'un véhicule automobile reliés par deux lignes de transmission d'informations. Pour des raisons de clarté, seul un organe est représenté sur la figure 1 et est désigné par la référence générale 1. Le ou les autres organes du dispositif présentent une structure analogue. Les lignes de transmission d'informations en différentiel sont désignées par les références 2 et 3.

Chaque organe comporte des moyens 4 d'émission d'informations et des moyens 5 de réception d'informations reliés à un gestionnaire de protocole désigné par la référence générale 6 sur ces figures et bien connu dans l'état de la technique.

Selon l'invention, les moyens de réception d'informations de chaque organe comportent trois comparateurs 7, 8 et 9.

Un premier comparateur, désigné par la référence 7, reçoit en entrée les signaux transitant sur les deux lignes de transmission d'informations 2 et 3.

Un second comparateur, désigné par la référence 8, reçoit en entrée les signaux D transitant sur une ligne de transmission d'informations et plus particulièrement sur la ligne 2. Un troisième comparateur désigné par la référence 9, reçoit en entrée les signaux $\overline{D}$ transitant sur l'autre ligne de transmission d'informations c'est-à-dire sur la ligne 3.

Les sorties de ces comparateurs 7, 8 et 9 sont référencées R0, R1 et R2, respectivement.

Par ailleurs, ces moyens de réception d'informations 5 comportent également, interposés entre la sortie de ces comparateurs et l'entrée d'informations RC du gestionnaire de protocole 6, des moyens 10 de connexion sélective de la sortie R0 du premier comparateur 7 ou de la sortie de moyens de combinaison logique des sorties R1 et R2 des second et troisième comparateurs 8 et 9, à l'entrée d'informations RC du gestionnaire de protocole.

Ces moyens de connexion sélective de l'une ou l'autre de ces sorties à l'entrée d'informations du gestionnaire de protocole, sont commandés par celui-ci en fonction de l'état des signaux présents à son entrée d'informations, pour permettre un fonctionnement du dispositif en mode différentiel normal et en mode dégradé à partir des informations transitant sur l'une des lignes de transmission d'informations, comme cela sera décrit plus en détail par la suite.

Cette commande résulte de la détection par le gestionnaire de protocole de défaillances dans les signaux présents à son entrée d'informations, ces défaillances pouvant résulter soit de l'absence de transmission cohérente pendant un temps déterminé, par exemple de 150 ms, soit d'un blocage de l'information dans un état dominant.

Comme on peut le voir sur la figure 2, ces moyens de connexion sélective comprennent en fait un multiplexeur 11 dont la sortie est reliée à l'entrée d'informations RC du gestionnaire de protocole 6 et dont les entrées reçoivent la sortie R0 du premier comparateur 7 et la sortie de moyens 12 de combinaison logique des sorties R1 et R2 des second et troisième comparateurs 8 et 9, ce multiplexeur étant piloté par une sortie de contrôle du gestionnaire de protocole.

Plus particulièrement, le multiplexeur comporte une première et une seconde portes ET désignées par les références 13 et 14, respectivement. Une entrée de la première porte ET 13 est reliée à la sortie Q d'une bascule D 15 tandis que l'autre entrée de cette première porte ET 13 est reliée à la sortie R0 du premier comparateur 7.

Une entrée de la seconde porte ET 14 est reliée à la sortie inversée $\overline{Q}$ de la bascule D tandis que l'autre entrée de cette seconde porte ET 14 est reliée à la sortie des moyens de combinaison logique 12.

Par ailleurs, l'entrée d'horloge de la bascule 15 est reliée à la sortie de contrôle du gestionnaire de protocole et les sorties des première et seconde portes ET 13 et 14 sont reliées aux entrées d'une première porte OU 16 dont la sortie est reliée à l'entrée d'informations RC du gestionnaire de protocole 6.

Les moyens de combinaison 12 des sorties des second et troisième comparateurs 8 et 9 réalisent des combinaisons ET et OU logiques de ces sorties R1 et R2.

Comme on peut le voir sur cette figure 2, ces moyens de combinaison 12 comprennent une troisième porte ET 17 dont la sortie est reliée à l'entrée correspondante de la seconde porte ET 14 du multiplexeur 11 et dont les entrées sont reliées aux sorties de seconde et troisième portes OU 18 et 19. Une entrée de la seconde porte OU 18 est reliée à la sortie R1 du second comparateur 8 tandis que l'autre entrée de cette seconde porte OU est reliée à la sortie Q d'une première bascule RS, 20, dont l'entrée R est également reliée à la sortie R1 du second comparateur 8.

Par ailleurs, une entrée de la troisième porte OU 19 est reliée à la sortie R2 du troisième comparateur 9 tandis que l'autre entrée de cette troisième porte OU 19 est reliée à la sortie Q d'une seconde bascule RS, 21, dont l'entrée R est reliée à la sortie R2 du troisième comparateur 9.

Les entrées S des première et seconde bascules RS sont reliées à la sortie de contrôle du gestionnaire de protocole 6.

Ainsi, les portes 13, 14 et 16 forment un multiplexeur permettant d'obtenir en sortie de la porte 16 soit la sortie R0 du premier comparateur 7 soit le résultat de la combinaison des sorties R1 et R2 des second et troisième comparateurs 8 et 9.

Ce multiplexeur 11 est commandé par la bascule 15 montée en diviseur par deux, sa sortie $\overline{Q}$ étant reliée à son entrée D et pilotée par le gestionnaire de protocole.

A chaque impulsion du signal de contrôle du gestionnaire de protocole, les sorties Q et $\overline{Q}$ de cette bascule changent de valeur, connectant ainsi soit le signal R0 soit une combinaison logique des signaux R1 et R2 à l'entrée d'informations du gestionnaire de protocole.

L'ensemble des portes et des bascules RS entrant dans la constitution des moyens de combinaison 12 permet de réaliser un ET logique entre les signaux R1 et R2 ou de sélectionner le signal R1 ou le signal R2.

A chaque impulsion du signal de contrôle, les bascules 20 et 21 sont initialisées bloquant ainsi les portes OU 18 et 19 à l'état 1.

Si le signal R1 est bloqué à 0 (dominant), ce signal ne peut pas passer à travers la bascule 18.

Dans le cas où le signal transitant sur l'autre ligne, c'est-à-dire le signal R2, est correct, un niveau 1 de ce signal R2 débloque la bascule 21 correspondante et la porte 19, de sorte que ce signal peut passer à travers la porte 17 vers le reste du circuit et donc le gestionnaire de protocole.

Le choix du signal utilisé dépend de l'état des signaux sur les lignes de transmission 2 et 3, c'est-à-dire D et $\overline{D}$.

Le tableau ci-dessous résume les différents cas de défaillances possibles :

| parasitage violent | R0 |
|---|---|
| décalage de masse | R0 |
| rupture d'un fil $\overline{D}$ (DATA) | R1, $\overline{R1}$ et R2 |
| rupture d'un fil D (DATA) | R2, R1 et R2 |
| mise au plus de D | R2, R1 et R2 |
| mise au plus de $\overline{D}$ | R1, R1 et R2 |
| mise à la masse de D | R2 |
| mise à la masse de $\overline{D}$ | R1 |

Ainsi, en utilisant les signaux R0, R1 et R2, on peut traiter six cas de défaillance sur huit et les deux derniers cas sont traités en utilisant le signal R1 ou le signal R2.

Le choix du signal de sortie suit donc la logique :
1) Choix entre R0 et (R1 et R2)
2) Dans le cas où l'on a choisi (R1 et R2) et que le fonctionnement n'est toujours pas assuré, on choisi entre R1 ou R2, ce qui permet au dispositif de fonctionner toujours au moins en mode dégradé.

**Revendications**

**1.** Dispositif de transmission d'informations en différentiel entre au moins deux organes d'un véhicule automobile, reliés par deux lignes de transmission d'informations (2, 3) dont chacun comporte des moyens d'émission d'informations (4) et des moyens de réception d'informations (5), reliés à un gestionnaire de protocole (6), les moyens de réception (5) de chaque organe (1) comportant trois comparateurs (7, 8, 9), un premier (7) recevant en entrée les signaux transitant sur les deux lignes de transmission d'informations (2, 3), un second (8) recevant en entrée les signaux transitant sur une ligne de transmission d'informations (2) et un troisième (9) recevant en entrée les signaux transitant sur l'autre ligne de transmission d'informations (3), caractérisé en ce qu'il comporte, interposés entre la sortie de ces comparateurs (7, 8, 9) et l'entrée d'informations (RC) du gestionnaire de protocole (6), des moyens (10) de connexion sélective de la sortie (R0) du premier comparateur (7) ou de la sortie de moyens (12) de combinaison logique des sorties (R1, R2) des deuxième et troisième comparateurs (8, 9), à l'entrée d'informations du gestionnaire de protocole, sous la commande de celui-ci en fonction de l'état des signaux présents à son entrée d'informations, pour permettre un fonctionnement du dispositif en mode différentiel normal et en mode dégradé à partir des informations transitant sur l'une des lignes de transmission (2, 3).

2. Dispositif de transmission d'informations selon la revendication 1, caractérisé en ce que les moyens de connexion sélective (10) comprennent un multiplexeur (11) dont la sortie est reliée à l'entrée d'informations (RC) du gestionnaire de contrôle (6), dont les entrées reçoivent la sortie (R0) du premier comparateur (7) et la sortie des moyens (12) de combinaison logique des sorties (R1, R2) des second et troisième comparateurs (8, 9) et piloté par une sortie de contrôle du gestionnaire de protocole (6).

3. Dispositif de transmission d'informations selon la revendication 1 ou 2, caractérisé en ce que ledit multiplexeur (11) comporte une première et une seconde portes ET (13, 14), une entrée de la première porte (13) étant reliée à la sortie Q d'une bascule D (15) tandis que l'autre entrée de cette première porte (13) est reliée à la sortie R0 du premier comparateur (7), une entrée de la seconde porte ET (14) étant reliée à la sortie inversée $\overline{Q}$ la bascule D (15) tandis que l'autre entrée de cette seconde porte ET (14) est reliée à la sortie des moyens de combinaison logique (12), l'entrée d'horloge de la bascule (15) étant reliée à la sortie de contrôle du gestionnaire de protocole (6), tandis que les sorties des première et seconde portes ET (13, 14) sont reliées aux entrées d'une première porte OU (16) dont la sortie est reliée à l'entrée d'informations (RC) du gestionnaire de protocole (6).

4. Dispositif de transmission d'informations selon l'une quelconque des revendications précédentes, caractérisé en ce que les moyens (12) de combinaison des sorties (R1, R2) des second et troisième comparateurs (8, 9) réalisent des combinaisons ET et OU logiques de ces sorties.

5. Dispositif de transmission d'informations selon la revendication 4, caractérisé en ce que les moyens de combinaison logique (12) comprennent une troisième porte ET (17) dont la sortie est reliée à l'entrée correspondante de la seconde porte ET (14) du multiplexeur (11) et dont les entrées sont reliées aux sorties de seconde et troisième portes OU (18, 19), une entrée de la seconde porte OU (18) étant reliée à la sortie (R1) du second comparateur (8) tandis que l'autre entrée de cette seconde porte OU (18) est reliée à la sortie Q d'une première bascule RS (20) dont l'entrée R est reliée à la sortie (R1) du second comparateur (8), une entrée de la troisième porte OU (19) étant reliée à la sortie (R2) du troisième comparateur (9) tandis que l'autre entrée de cette troisième porte OU (19) est reliée à la sortie Q d'une seconde bascule RS (21) dont l'entrée R est reliée à la sortie (R2) du troisième comparateur (9), les entrées S des première et seconde bascules RS (20, 21) étant reliées à la sortie de contrôle du gestionnaire de protocole (6).

**Claims**

1. Device for differential information transmission between at least two components of a motor vehicle, connected by two information transmission lines (2, 3), whereof each comprises information transmission means (4) and information receiving means (5), connected to a programme management unit (6), the receiving means (5) of each component (1) comprising three comparators (7, 8, 9), a first (7) receiving at its input the signals travelling on the two information transmission lines (2, 3), a second (8) receiving at its input the signals travelling on one information transmission line (2) and a third (9) receiving at its input the signals travelling on the other information transmission line (3), characterised in that it comprises, interposed between the output of these comparators (7, 8, 9) and the information input (RC) of the programme management unit (6), means (10) for the selective connection of the output (RO) of the first comparator (7) or of the output of means (12) for the logic combination of the outputs (R1, R2) of the second and third comparators (8, 9), to the information input of the programme management unit, under the control of the latter as a function of the state of the signals present at its information input, in order to allow an operation of the device in normal differential mode and in reduced mode from information travelling on one of the transmission lines (2, 3).

2. Device for information transmission according to Claim 1, characterised in that the selective connection means (10) comprise a multiplexer (11) whereof the output is connected to the information input (RC) of the control management unit (6), whereof the inputs receive the output (RO) of the first comparator (7) and the output of the means (12) for the logic combination of the outputs (R1, R2) of the second and third comparators (8, 9) and which is controlled by a control output of the programme management unit (6).

3. Device for information transmission according to Claim 1 or 2, characterised in that said multiplexer (11) comprises a first and a second AND gate (13, 14), one input of the first gate (13) being connected to the output Q of a flip-flop D (15) whereas the other input of this first gate (13) is connected to the output RO of the first comparator (7), an input of the second AND gate (14) being connected to the inverted output $\overline{Q}$ of the flip-flop D (15) whereas the other input of this second AND gate (14) is connected to the output of the logic combination means (12), the clock input of the flip-flop (15) being connected to the control output of the programme management unit (6), whereas the outputs of the first and second AND gates (13, 14) are connected to the inputs of a first OR gate (16) whereof the output is connected to the information input (RC) of the programme management unit (6).

4. Device for information transmission according to any one of the preceding Claims, characterised in that the means (12) for the combination of the outputs (R1, R2) of the second and third comparators (8, 9) produce AND and OR logic combinations of these outputs.

5. Device for information transmission according to Claim 4, characterised in that the logic combination means (12) comprise a third AND gate (17) whereof the output is connected to the corresponding input of the second AND gate (14) of the multiplexer (11) and whereof the inputs are connected to the outputs of the second and third OR gates (18, 19), one input of the second OR gate (18) being connected to the output (R1) of the second comparator (8), whereas the other input of this second OR gate (18) is connected to the output Q of a first flip-flop RS (20) whereof the input R is connected to the output (R1) of the second comparator (8), one input of the third OR gate (19) being connected to the output (R2) of the third comparator (9), whereas the other input of this third OR gate (19) is connected to the output Q of a second RS flip-flop (21) whereof the input R is connected to the output (R2) of the third comparator (9), the inputs S of the first and second RS flip-flops (20, 21) being connected to the control output of the programme management unit (6).

**Patentansprüche**

1. Vorrichtung zur differentiellen Datenübertragung zwischen mindestens zwei Bauteilen eines Kraftfahrzeugs, die durch zwei Datenübertragungsleitungen (2, 3) miteinander verbunden sind, wobei jedes eine Datensendeeinrichtung (4) und eine Datenempfangseinrichtung (5) aufweist, die mit einer Protokoll-Steuereinrichtung (6) verbunden sind, wobei die Empfangseinrichtung (5) jedes Organs (1) drei Komparatoren (7, 8, 9) aufweist, von denen der erste (7) eingangsseitig die auf beiden Datenübertragungsleitungen (2, 3) laufenden Signale empfängt, der zweite (8) eingangsseitig die auf einer der Datenübertragungsleitungen (2) laufenden Signale und der dritte (9) eingangsseitig die auf der anderen der Datenübertragungsleitungen (3) laufenden Signale empfängt, dadurch gekennzeichnet, daß sie eine zwischen den Ausgang dieser Komparatoren (7, 8, 9) und den Dateneingang (RC) der Protokoll-Steuereinrichtung (6) geschaltete Einrichtung (10) aufweist, welche selektiv den Ausgang (R0) des ersten Komparators (7) oder den Ausgang einer Einrichtung (12) zum logischen Kombinieren der Ausgänge (R1, R2) des zweiten und dritten Komparators (8, 9) mit dem Dateneingang der Protokoll-Steuereinrichtung unter Steuerung durch diese in Abhängigkeit vom Zustand der an ihrem Dateneingang anliegenden Signale verbindet, um einen Betrieb der Vorrichtung im normalen differentiellen Modus und in einem eingeschränkten Modus, ausgehend von den auf einer der Übertragungsleitungen (2, 3) vorliegenden Daten, zu ermöglichen.

2. Datenübertragungsvorrichtung nach Anspruch 1, dadurch gekennzeichnet, daß die Einrichtung (0) zum wahlweisen Verbinden einen Multiplexer (11) aufweist, dessen Ausgang mit dem Dateneingang (RC) der Protokoll-Steuereinrichtung (6) verbunden ist, dessen Eingänge das Ausgangssignal (R0) des ersten Komparators (7) und das Ausgangssignal der Einrichtung (12) zum logischen Kombinieren der

6

Ausgänge (R1, R2) des zweiten und des dritten Komparators (8, 9) empfangen, und der durch ein Steuerausgangssignal der Protokoll-Steuereinrichtung (6) gesteuert ist.

3. Datenübertragungsvorrichtung nach Anspruch 1 oder 2, dadurch gekennzeichnet, daß der Multiplexer (11) ein erstes und ein zweites UND-Tor (13, 14) aufweist, wobei ein Eingang des ersten Tores (13) mit dem Ausgang Q eines D-Flipflops (15) verbunden ist, während der andere Eingang dieses ersten Tores (13) mit dem Ausgang R0 des ersten Komparators (7) verbunden ist, wobei ein Eingang des zweiten UND-Tores (14) mit dem invertierten Ausgang $\overline{Q}$ des D-Flipflops (15) verbunden ist, während der andere Eingang des zweiten UND-Tores (14) mit dem Ausgang der Einrichtung (12) zum logischen Kombinieren verbunden ist, und wobei der Takteingang des Flipflops (15) mit dem Steuerausgang der Protokoll-Steuereinrichtung (6) verbunden ist, während die Ausgänge des ersten und des zweiten UND-Tores (13, 14) mit den Eingängen eines ersten ODER-Tores (16) verbunden sind, dessen Ausgang mit dem Dateneingang (RC) der Protokoll-Steuereinrichtung (6) verbunden ist.

4. Datenübertragungsvorrichtung nach einem der vorhergehenden Ansprüche, dadurch gekennzeichnet, daß die Einrichtung (12) zum Kombinieren der Ausgänge (R1, R2) des zweiten und des dritten Komparators (8, 9) eine logische UND- und ODER-Verknüpfung dieser Ausgänge bewirkt.

5. Datenübertragungsvorrichtung nach Anspruch 4, dadurch gekennzeichnet, daß die Einrichtung (12) zum logischen Kombinieren ein drittes UND-Tor (17) aufweist, dessen Ausgang mit dem entsprechenden Eingang des zweiten UND-Tores (14) des Multiplexers (11) verbunden ist und dessen Eingänge mit den Ausgängen des zweiten und dritten ODER-Tores (18, 19) verbunden sind, wobei ein Eingang des zweiten ODER-Tores (18) mit dem Ausgang (R1) des zweiten Komparators (8) verbunden ist, während der andere Eingang des zweiten ODER-Tores (18) mit dem Ausgang Q eines ersten RS-Flipflops (20) verbunden ist, dessen Eingang R mit dem Ausgang (R1) des zweiten Komparators (8) verbunden ist, wobei ein Eingang des dritten ODER-Tores (19) mit dem Ausgang (R2) des dritten Komparators (9) verbunden ist, während der andere Eingang des dritten ODER-Tores (19) mit dem Ausgang Q eines zweiten RS-Flipflops (21) verbunden ist, dessen Eingang R mit dem Ausgang (R2) des dritten Komparators (9) verbunden ist, und wobei die Eingänge S des ersten und des zweiten RS-Flipflops (20, 21) mit dem Steuerausgang der Protokoll-Steuereinrichtung (6) verbunden sind.

FIG·1

FIG·2